# FASCICULE DE BREVET EUROPEEN

(11) **EP 0 459 870 B1**
(45) Date de publication et mention de la délivrance du brevet: **23.11.1994**
(21) Numéro de dépôt: 91401319.8
(22) Date de dépôt: 22.05.1991
(51) Int. Cl.: A01K 85/10

(54) **Cuiller tournante pour la pêche des poissons carnassiers**
Blinker zum Fangen von Raubfischen
Spinner to catch predatory fish

(30) Priorité: 29.05.1990 FR 9006657
(43) Date de publication de la demande: 04.12.1991
(73) Titulaire: ASTUCIT S.A.R.L., F-58130 Guerigny (FR)
(72) Inventeur: Drachkovitch, Albert, F-58150 Garchy (FR)
(74) Mandataire: Bonnetat, Christian

(56) Documents cités:
- DE-A- 3 024 383
- FR-A- 393 982
- FR-A- 542 770
- FR-A- 955 183
- FR-A- 2 546 715
- US-A- 1 489 035
- US-A- 1 603 118
- US-A- 1 990 693
- US-A- 2 206 274
- US-A- 2 902 791
- US-A- 3 918 192

## Description

La présente invention concerne une cuiller tournante pour la pêche des poissons carnassiers.

On sait que de telles cuillers tournantes comportent essentiellement :
. un axe, à une extrémité duquel est monté un hameçon, généralement triple, et à l'autre extrémité duquel est prévue une boucle pour la fixation à une ligne de pêche, par exemple un fil de polyamide ou un câble d'acier ;
. une palette ; et
. une articulation reliant, du côté de ladite boucle, une extrémité de ladite palette audit axe.

Ainsi, sous l'effet de la résistance de l'eau à l'avance de la cuiller, ladite palette tourne autour dudit axe.

On sait, de plus, que les vibrations émises par la palette tournant autour de l'axe sont détectées par la ligne latérale sensitive des poissons carnassiers et que ce sont ces vibrations qui, bien plus que l'aspect de la cuiller, incitent les poissons carnassiers à mordre et à s'accrocher à l'hameçon.

Dans une première forme de réalisation connue, l'axe est constitué par une simple tige, par exemple une corde à piano de quelques dizaines de centièmes de mm. Cet axe est donc léger et il en résulte que la palette, surtout si elle est allongée, tourne rapidement près de l'axe et régulièrement autour dudit axe. Les vibrations émises sont donc régulières et il a été remarqué qu'elles étaient relativement moins attractives pour les poissons carnassiers que des vibrations plus irrégulières.

Dans une deuxième forme de réalisation, également connue, l'axe est plombé, de sorte que ledit axe forme une masse axiale allongée. L'inertie de cette masse axiale contrarie légèrement la rotation de la palette, la rendant plus ou moins papillonnante, et, dans ce cas, les vibrations émises sont plus irrégulières, donc plus attractives pour les poissons carnassiers que celles émises par les cuillers à axe léger.

Dans ces deux formes de réalisation, l'axe est rigide et il en résulte l'inconvénient que le poisson carnassier ayant attaqué la cuiller peut prendre appui sur ledit axe pour se décrocher de l'hameçon. Pour remédier à cet inconvénient, on a déjà proposé, dans le cas d'un axe léger --voir par exemple les brevets français FR-A-955 183 et FR-A-1 035 843-- de remplacer ladite tige par un lien souple. Dans ce cas, il devient impossible au poisson carnassier de prendre appui sur l'axe pour tenter de le décrocher.

La présente invention a pour objet de réaliser une cuiller évitant les vibrations de rotation régulières, relativement peu attractives, et éliminant l'inconvénient d'un axe rigide.

A cette fin, l'invention concerne une cuiller tournante pour la pêche des poissons carnassiers, comportant un axe, à une extrémité duquel est monté un hameçon et à l'autre extrémité duquel est prévue une boucle pour la fixation à une ligne de pêche, une palette et une articulation reliant, du côté de ladite boucle, une extrémité de ladite palette audit axe de façon que ladite palette puisse, sous l'effet de la résistance de l'eau à l'avance de la cuiller, tourner autour dudit axe, cuiller dans laquelle ledit axe comporte une succession de petites masses articulées deux à deux et est disposé dans une gaine de matière souple, épousant lesdites masses, de sorte que ledit axe est, sur la plus grande partie de sa longueur, à la fois pesant, souple et rectiligne.

Ainsi, en action de pêche, la palette émet non seulement des vibrations de rotation, mais encore des vibrations de papillonnement, qui, en se combinant, produisent des vibrations irrégulières attractives. De plus, l'axe pesant ne peut servir d'appui au poisson carnassier ayant attaqué la cuiller, pour se décrocher.

On remarquera que le document US-A-3 918 192 décrit une cuiller tournante dont l'axe est formée par une chaîne souple, constituée par une pluralité de billes creuses articulées entre elles. Cependant, l'axe de cette cuiller ne présente aucune rectitude intrinsèque et rien dans ledit document ne permet d'assimiler lesdites billes creuses à de petites masses, susceptibles de rendre ledit axe pesant.

Dans la cuiller conforme à la présente invention, ladite succession de petites masses est avantageusement formée par une chaînette. Une telle chaînette peut être simplement constituée de maillons engagés l'un dans l'autre. En variante, ladite chaînette est constituée de nodules deux à deux articulés, à la manière des chaînettes utilisées dans les lavabos ou les éviers pour retenir les obturateurs d'écoulement.

Afin d'augmenter encore les possibilités de papillonnement de la palette, on prévoit, selon une caractéristique supplémentaire de la présente invention, que l'articulation permettant la rotation de la palette autour dudit axe autorise de plus la palette à osciller autour de son axe longitudinal.

Ainsi, les oscillations de la palette autour de son axe longitudinal s'ajoutent aux vibrations précitées, de sorte que la cuiller présente un comportement irrégulier, particulièrement attractif. De plus, sur un relâcher de la ligne par le pêcheur, la palette descend en virevoltant, à la manière d'une feuille morte, ce qui ajoute à l'attrait de la cuiller pour le poisson carnassier.

De façon connue, ladite articulation peut comporter un étrier semi-circulaire, coplanaire audit axe et librement tourillonné autour de celui-ci selon son diamètre. Dans ce cas, pour obtenir lesdites oscillations autour de l'axe longitudinal de la palette, il est avantageux que ladite articulation comporte de plus un anneau engagé librement, d'une part dans ledit étrier et, d'autre part, dans un trou prévu à l'extrémité correspondante de ladite palette.

Bien que s'adressant à tous les poissons carnassiers, la cuiller de la présente invention concerne principalement les poissons carnassiers de grandes tailles et notamment les brochets. Il est donc avantageux que la longueur de la palette soit importante, au moins égale à 5 cm.

Pour augmenter encore l'attrait de la cuiller selon l'invention, on dispose un pompon autour de l'hameçon, ce pompon étant par exemple réalisé en laine rouge ou en tinsel brillant.

Les figures du dessin annexé feront bien comprendre comment l'invention peut être réalisée. Sur ces figures, des références identiques désignent des éléments semblables.

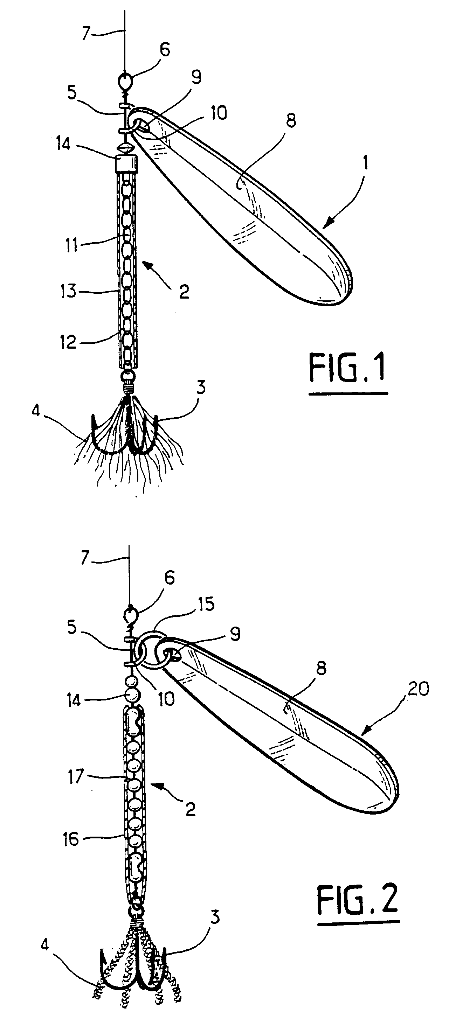

Les figures 1 et 2 illustrent deux exemples de réalisation de la cuiller conforme à la présente invention.

La cuiller tournante 1 pour la pêche des poissons carnassiers, conforme à l'invention et représentée sur la figure 1, comporte un axe 2, à une extrémité duquel est monté un hameçon triple 3, enrobé par un pompon de tinsel argenté ou doré 4. A l'autre extrémité de l'axe 2 est prévue une tige 5 pourvue d'une boucle 6 permettant de fixer ladite cuiller 1 à une ligne de pêche 7.

La cuiller 1 comporte de plus une palette allongée 8 qui, au voisinage d'une de ces extrémités, est percée d'un trou 9, dans laquelle passe un étrier semi-circulaire 10, pouvant librement tourner autour de son diamètre, par rapport à la tige 5.

Selon l'invention, entre la tige 5 et l'hameçon 3, l'axe 2 est constitué par une chaînette 11, formée de maillons 12 emboîtés les uns à la suite des autres et enveloppée par une gaine plastique souple 13 (représentée en coupe axiale).

Au moins une bille 14, ou analogue, est disposée entre la chaînette 11 et l'étrier 10, afin de favoriser la rotation dudit étrier et donc de la palette 8.

Ainsi, on obtient une cuiller à axe 2 pesant, mais souple.

Dans la variante de réalisation 20 de la cuiller selon l'invention, représentée sur la figure 2, on retrouve les éléments 2 à 10, 13 et 14 décrits ci-dessus. Toutefois, le pompon 4 est alors réalisé en laine rouge.

De plus, entre l'étrier 10 et la palette 8, est prévu un anneau brisé 15, passant à la fois dans ledit étrier 10 et dans le trou 9 de cette palette.

Par ailleurs, dans ce mode de réalisation, entre la tige 5 et l'hameçon 3, l'axe 2 est alors constitué par une chaînette 16, constituée d'une suite de nodules 17, articulés les uns aux autres, à la manière des chaînettes de lavabo.

Là encore, on obtient une cuiller à axe pesant et souple, la palette 8 étant de plus libre d'osciller et de virevolter par rapport audit axe 2.

## Revendications

1. Cuiller tournante (1,20) pour la pêche des poissons carnassiers, comportant un axe (2), à une extrémité duquel est monté un hameçon (3) et à l'autre extrémité duquel est prévue une boucle (6) pour la fixation à une ligne de pêche (7), une palette (8) et une articulation (10) reliant, du côté de la dite boucle, une extrémité de ladite palette audit axe de façon que ladite palette puisse, sous l'effet de la résistance de l'eau à l'avance de la cuiller, tourner autour dudit axe, cuiller dans laquelle ledit axe comporte une succession de petites masses articulées deux à deux et est disposé dans une gaine de matière souple (13), épousant lesdites masses, de sorte que ledit axe est, sur la plus grande partie de sa longueur, à la fois pesant, souple et rectiligne.

2. Cuiller selon la revendication 1,
caractérisée en ce que ladite succession de petites masses est formée par une chaînette (11,16).

3. Cuiller selon la revendication 2,
caractérisée en ce que ladite chaînette (11) est constituée de maillons engagés l'un dans l'autre.

4. Cuiller selon la revendication 2,
caractérisée en ce que ladite chaînette (16) est constituée de nodules deux à deux articulés.

5. Cuiller selon l'une quelconque des revendications 1 à 4, caractérisée en ce que l'articulation permettant la rotation de la palette autour dudit axe autorise de plus la palette à osciller autour de son axe longitudinal.

6. Cuiller selon la revendication 5, dans laquelle ladite articulation comporte un étrier semi-circulaire (10), coplanaire audit axe et librement tourillonné autour de celui-ci selon son diamètre,
caractérisée en ce que ladite articulation comporte de plus un anneau (15) engagé librement, d'une part dans ledit étrier et, d'autre part, dans un trou (9) prévu à l'extrémité correspondante de ladite palette (8).

7. Cuiller selon l'une quelconque des revendications 1 à 6, caractérisée en ce que la longueur de ladite palette est au moins égale à 5 cm.

8. Cuiller selon l'une quelconque des revendications 1 à 7, caractérisée en ce que ledit hameçon porte un pompon (4).

## Claims

1. Rotating spoon (1, 20) for fishing for carnivorous fish, including an axis (2), at one end of which a hook (3) is mounted, and at the other end of which a loop (6) is provided for fixing to a fishing line (7), a vane (8) and an articulation (10) linking one end of the said vane, on the same side as the said loop, to the said axis in such a way that the said vane can turn about the said axis, under the effect of the resistance of the water and the forward movement of the spoon, in which spoon the said axis includes a succession of small masses articulated in pairs and is arranged in a sheath of flexible material (13), matching the said masses, in such a way that the said axis is, over the larger part of its length, both heavy, flexible and straight-line.

2. Spoon according to Claim 1, characterized in that the said succession of small masses is formed by a small chain (11, 16).

3. Spoon according to Claim 2, characterized in that the said small chain (11) consists of links engaged in one another.

4. Spoon according to Claim 2, characterized in that the said small chain (16) consists of nodules articulated in pairs.

5. Spoon according to one of Claims 1 to 4, characterized in that the articulation allowing the rotation of the vane about the said axis moreover allows the vane to oscillate about its longitudinal axis.

6. Spoon according to Claim 5, in which the said articulation includes a semi-circular shackle (10), coplanar with the said axis and turning freely about the latter over its diameter,
characterized in that the said articulation moreover includes a ring (15) freely engaged, on the one hand, in the said shackle and, on the other hand, in a hole (9) provided at the corresponding end of the said vane (8).

7. Spoon according to any one of Claims 1 to 6, characterized in that the length of the said vane is at least equal to 5 cm.

8. Spoon according to any one of Claims 1 to 7, characterized in that the said hook carries a tassel (4).

## Patentansprüche

1. Blinker (1, 20) zum Fangen von Raubfischen mit einer Achse (2), an deren einem Ende ein Haken (3) angebracht ist und an deren anderem Ende eine Öse (6) zur Befestigung an einer Angelschnur (7) vorgesehen ist, mit einem Blatt (8) und mit einem Gelenk (10), das an der Seite der Öse ein Ende des Blattes mit der Achse verbindet, so daß das Blatt beim Vorwärtsbewegen des Blinkers unter der Wirkung des Wasserwiderstandes sich um die Achse drehen kann, wobei die Achse eine Folge von kleinen Massekörpern umfaßt, die zu zweien gelenkig miteinander verbunden sind, und in einer Hülle (13) aus biegsamem Material angeordnet ist, welche die Massekörper berührt, derart, daß die Achse über den größten Teil ihrer Länge zugleich schwer, biegsam und gradlinig ist.

2. Blinker nach Anspruch 1, dadurch gekennzeichnet, daß die Folge der kleinen Massekörper durch ein Kettchen (11, 16) gebildet ist.

3. Blinker nach Anspruch 2, dadurch gekennzeichnet, daß das Kettchen (11) aus Kettengliedern zusammengesetzt ist, die ineinander greifen.

4. Blinker nach Anspruch 2, dadurch gekennzeichnet, daß das Kettchen (16) aus kleinen Knoten zusammengesetzt ist, die zu zweien miteinander gelenkig verbunden sind.

5. Blinker nach einem der Ansprüche 1 bis 4, dadurch gekennzeichnet, daß das Gelenk, das die Drehung des Blattes um die Achse zuläßt, zudem gestattet, daß das Blatt um seine Längsachse oszilliert.

6. Blinker nach Anspruch 5, bei welchem das Gelenk einen halbkreisförmigen Bügel (10) umfaßt, der koplanar mit der Achse angeordnet und entsprechend seinem Durchmesser um diese frei drehbar ist, dadurch gekennzeichnet, daß das Gelenk zudem einen Ring (15) umfaßt, der einerseits in den Bügel und andererseits in ein an dem entsprechenden Ende des Blattes (8) vorgesehenes Loch (9) frei eingreift.

7. Blinker nach einem der Ansprüche 1 bis 6, dadurch gekennzeichnet, daß die Länge des Blattes wenigstens 5 cm beträgt.

8. Blinker nach einem der Ansprüche 1 bis 7, dadurch gekennzeichnet, daß der Haken einen Pompon (4) trägt.
